Europäisches Patentamt

European Patent Office

Office européen des brevets

(19)

(11) **EP 1 560 118 A1**

(12) **EUROPEAN PATENT APPLICATION**

(43) Date of publication:
**03.08.2005 Bulletin 2005/31**

(51) Int Cl.7: **G06F 11/10**

(21) Application number: **04290211.4**

(22) Date of filing: **27.01.2004**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **Infineon Technologies AG**
**81669 München (DE)**

(72) Inventor: **Borri, Simone**
**06600 Antibes (FR)**

(74) Representative:
**Graf Lambsdorff, Matthias, Dr. et al**
**Patentanwälte**
**Lambsdorff & Lange**
**Dingolfinger Strasse 6**
**81673 München (DE)**

(54) **Error detection and correction device and method**

(57)     Device for detecting and correcting errors in words comprising a table (HARD_SYN_STOR_TABLE) for storing hard-errors of a memory (MEM), a generator (SYN_GEN) for generating the output syndrome (out_syn) for an outputted memory word, correction blocks (HARD_ERR_CORR, SOFT_ERR_CORR) for correcting a hard- and a soft-error if the word contains a double-error and a hard-error is stored in the table (HARD_SYN_STOR_TABLE) for that address (A), wherein the errors are corrected by using syndromes (hard_syn, soft_syn) generated from the corresponding hard-error and from the output syndrome (out_syn).

FIG 1

**Description**

The invention deals with an error detection and correction device for embedded memories and a method for the same purpose.

Memories are particular sensitive to soft-errors which are transitory single-bit faults. Soft-errors may be due to single event upsets (SEU) caused by radiation sources or other temporary noise sources, such as IR drops or crosstalks. Thus, in high reliability applications, error correcting codes (ECC) are added to the memory in order to improve its soft-error rate (SER).

Embedded memories are also the main yield detractors in today's system-on-chips. Therefore a hard-redundancy scheme, for example spare words, wordlines, IOs or a mix of them, is usually employed to improve manufacturing yield. For large embedded memories with severe SER requirements, both an ECC scheme and a hard-redundancy scheme are consequently necessary in order to improve yield while keeping high soft-error tolerance.

Adding error correcting codes to memories is a standard practice (see for example E. Dupont et al., "Embedded Robustness IPs for Transient-Error-Free ICs", IEEE Design & Test of Computers, vol. 19, no. 3, pp. 56-70, May-June 2002). For embedded memories, SEC (single-error correction) or SEC/DEC (single-error correction/double-error correction) Hamming codes are commonly employed since they allow the correction of one soft-error in each memory word with minimum hardware overhead (see for example K. Gray, "Adding error-correcting circuitry to ASIC memory", IEEE Spectrum, pp. 55-60, April 2000). Schemes with higher error correction capabilities also exist, but they have a larger impact in terms of area overhead and degradation of memory timings (see for example C. L. Chen and M. Y. Hsiao, "Error-Correcting Codes for Semiconductor Memory Applications: A State-of-the-Art Review", IBM J. Res. Develop., vol. 28, no. 2, pp. 124-134, March 1984). Moreover single-error correction is usually sufficient because soft-errors are randomly distributed and the probability of having two of them occurring in the same memory word can be considered negligible for current soft-error rate levels of IFX memories at sea-level. When an application needs ECC for soft-error fault tolerance, the code correction capabilities could also be used to correct hard-errors, which are permanent faults usually caused by manufacturing defects. However, using code correction capabilities for the correction of hard-errors affects the soft-error tolerance of the system and hence its reliability. Therefore, for large embedded memories with severe SER requirements - as stated above - both an ECC scheme and a hard-redundancy scheme are necessary in order to improve manufacturing yield while keeping high soft-error tolerance.

Since the main yield detractor are single-bit faults, the most common hard-redundancy scheme within IFX memories is based on redundant words (see for example V. Schöber et al., "Memory Built-In Self-Repair using redundant words", Proceedings of International Test Conference 2001, pp. 995-1001). The main object of such a hard-redundancy scheme is the correction of single-bit faults or clustered faults.

Single-bit faults are usually randomly distributed across the memory core-cell array. Even in the presence of fault clusters, it is very rare that more than one error occurs in the same memory word because the bits belonging to the same word are physically situated far apart from each other in all IFX embedded SRAMs (static random access memory).

One possibility to avoid using a hard-redundancy scheme would be to implement a DEC (double-error correction) code, which enables to correct one hard-error and one soft-error in each memory word. However, a DEC code needs nearly twice the area overhead of a corresponding SEC or SEC/DED code for the same memory data width (see C. L. Chen and M. Y. Hsiao, "Error-Correcting Codes for Semiconductor Memory Applications: A State-of-the-Art Review", IBM J. Res. Develop., vol. 28, no. 2, pp. 124-134, March 1984). Nevertheless, it is well known from coding theory that an SEC/DED code having a Hamming distance of 4 is able to correct one soft-error as well as one "erasure", which is an error whose location is known (see D. C. Bossen and M. Y. Hsiao, "A System Solution to the Memory Soft Error Problem", IBM J. Res. Develop., vol. 24, no. 3, pp. 390-397, May 1980). Some schemes based on this possibility have been implemented in the past for double-error correction in computer storage systems (see for example the U. S. patents nos. 3,656,107, 4,139,148, 4,163,147 and 4,319,357). These schemes are based on microprocessor-controlled sequential procedures and are not suitable for the on-line correction of embedded memories.

It is an object of the present invention to provide a device capable of detecting and correcting one hard-error and one soft-error within one cycle, wherein the device requires less area than conventional devices pursuing the same purpose. A method for the same purpose shall be also provided.

The above formulated object on which the invention is based is achieved by an error detection and correction device according to claim 1 and by a method according to claim 10.

Preferred and advantageous embodiments of the error detection and correction device according to claim 1 are subject matter of claims 2 to 9. Preferred and advantageous embodiments of the method according to claim 6 are subject matter of claims 11 to 15.

The purpose of the error detection and correction device according to the invention is to detect and correct errors in words which were previously outputted from a memory. Each of these words comprises data bits and parity bits.

For the purpose stated above the error detection and correction device according to the invention comprises a hard-error storage table, a syndrome generator, a hard-error correction block and a soft-error correction block.

In the hard-error storage table the address locations of hard-errors within the memory are stored. These hard-errors are usually manufacturing defects. Their locations can be determined by a built-in self test (BIST). Knowing the location of a hard-error does not however mean that the error will always be present. For instance, a stuck-at zero fault in a certain bit causes an error on the memory data output only when the value previously written in that cell was a '1'. Thus a hard-error whose locations is known is equivalent to an "erasure" because the value present in that location may or may not be affected by an error and thus is equivalent to an unknown value.

When a word has been read from the memory, the syndrome generator generates the output syndrome for that word.

Only if this output syndrome indicates a double-error in the word and if information about a hard-error is stored in the hard-error storage table for the address of that word, the hard-error and soft-error correction blocks will be employed for correcting both errors.

For correcting the hard-error of the word, the hard-error correction block uses a hard syndrome that has been previously generated from the corresponding hard-error stored in the hard-error storage table.

The soft-error of the word is corrected by the soft-error correction block using a soft syndrome generated from the output syndrome and the hard syndrome.

The hard-error and the soft-error correction blocks can have the same architecture as blocks usually used for error correction purposes in standard SEC/DED ECC schemes.

Compared to common ECC schemes, the error detection and correction device according to the invention is able to correct hard-errors. Compared to an ECC solution with a hard-redundancy scheme, the error detection and correction device according to the invention is advantageous because it has the same yield and reliability regarding double-errors, but it requires a smaller area. In particular, the invention eliminates the need for redundant word registers.

The error detection and correction device according to the invention is suitable for every kind of memory provided that the main hard failure mechanism is due to single-bit faults and/or clustered single-bit faults in case the bits belonging to the same memory word are not physically adjacent.

When the error detection and correction device according to the invention is used in conjunction with an on-line test approach, which means that the BIST runs at every system start-up, laser or electrical fuses are no longer necessary.

The invention is only applicable to the case of double-errors, which consist of one hard-error and one soft-error. Two soft-errors can also be detected by the invention when they are not in conjunction with a hard-error in the same memory word. If two soft-errors are present at one address location and a hard-error is already stored in the hard-error storage table for that address location, the two soft-errors cannot be detected by using the invention. However, this restriction on the double-error detection capability has only negligible impact since such a case is usually very rare.

The error detection and correction device advantageously comprises an exclusive OR gate for exclusive ORing the output syndrome with the hard syndrome. Exclusive ORing the output syndrome with the hard syndrome is equivalent to a modulo-2 subtraction of the hard syndrome from the output syndrome. The output of the exclusive OR gate is the soft syndrome, which is needed for eliminating the soft-error. This is an advantageous way of calculating the soft syndrome from the output and hard syndromes in case a linear SEC/DED code is employed for detecting and correcting the errors.

In order to correct a single-error if the output syndrome indicates such an error, the error detection and correction device according to the invention advantageously comprises a single-error correction block which is only used for correcting single-errors. This single-error can be a hard-error or a soft-error. For correcting the single-error the output syndrome is used. As for the hard-error and the soft-error correction blocks, a standard correction block can be used for the single-error correction block.

Together with the single-error correction block, the error detection and correction device can perform all tasks a standard SEC/DED ECC scheme can perform. Moreover, both solutions have the same yield and reliability performance, but the solution according to the invention needs less area.

As an alternative to the previously described advantageous embodiment of the invention, a single-error can be also corrected by the soft-error correction block or the hard-error correction block. For this, the output syndrome has to be sent to the soft- or hard-error correction block.

In accordance with one advantageous configuration of the invention, the error detection and correction device comprises a syndrome selection logic and/or an error indication logic.

From the output syndrome and the hard-errors stored in the hard-error storage table the number and the kind of the errors (soft- or hard-errors) of the corresponding memory word can be inferred. From these information the syndrome selection logic can select which error correction blocks will be used for the error-correction.

The error indicating logic indicates the number and the kind of the errors detected in a word read from the memory.

In case a double-error is detected and no hard-error for the address of the word currently read is stored in the hard-error storage table, the error indicating logic will advantageously activate a double-soft-error detection signal. In this case the errors cannot be corrected by the error detection and correction device, as it is the case for all the error detection and correction devices using SEC/DED codes.

It can advantageously be provided that the hard syndromes corresponding to the hard-errors are also stored in the hard-error storage table. The locations of the hard-errors can be determined by a BIST prior to the use of the memory. Afterwards the hard syndromes can be calculated for every memory word comprising a hard-error and both the addresses of these memory words and the corresponding hard syndromes can be stored in the hard-error storage table. This advantageous configuration eliminates the need for determining the hard syndromes while running the error detection and correction device.

As an alternative of storing the hard syndromes in the hard-error storage table, it can be also provided that only the address locations of the memory words containing hard-errors and the bit positions of the hard-errors are stored in the hard-error storage table. When needed the hard syndromes are computed in this case by a hard-syndrome generator. The advantage of this embodiment is that storing the positions of the erroneous bits requires less memory capacity than storing the hard syndromes.

The two alternative embodiments of the hard-error storage table previously explained can be illustrated with an exemplary 8Kx16 memory and a (22,16) SEC/DED code. In case of storing the hard syndromes, 13 bits are needed for each address location of the erroneous words and 6 bits for each hard syndrome. In the other case only 4 bits are needed for storing the bit position of each hard-error. However, storing the hard syndromes has a clear performance advantage because the hard-syndromes are pre-computed.

An address comparator can advantageously be provided for comparing the address of a word read from the memory with the addresses of the erroneous words stored in the hard-error storage table. In case of match, the corresponding hard syndrome or the bit position of the hard-error is outputted from the hard-error storage table for further processing. Furthermore a signal indicating that a hard-error was detected can be set.

In accordance with the present invention, a method of detecting and correcting errors in words outputted from a memory comprises the following steps, wherein hard-errors of the memory were determined before the method is performed:

(a) generating the output syndrome for a word read from the memory, wherein the words stored in the memory comprise data bits and parity bits;
(b) correcting one hard-error of said word if said output syndrome indicates a double-error in said word and if a hard-error for the address of said word was previously determined, wherein said hard-error is corrected by using a hard syndrome generated from the corresponding hard-error; and
(c) correcting one soft-error of said word if said output syndrome indicates a double-error in said word and if a hard-error for the address of said word was previously determined, wherein said soft-error is corrected by using a soft syndrome generated from said output syndrome and said hard syndrome.

The method according to the invention has the same advantages over conventional methods of detecting and correcting errors as the device according to claim 1.

The invention is explained below in an exemplary manner with reference to the drawings, in which

Fig. 1    shows a first exemplary embodiment of the error detection and correction device according to the invention; and

Fig. 2    shows a second exemplary embodiment of the error detection and correction device according to the invention.

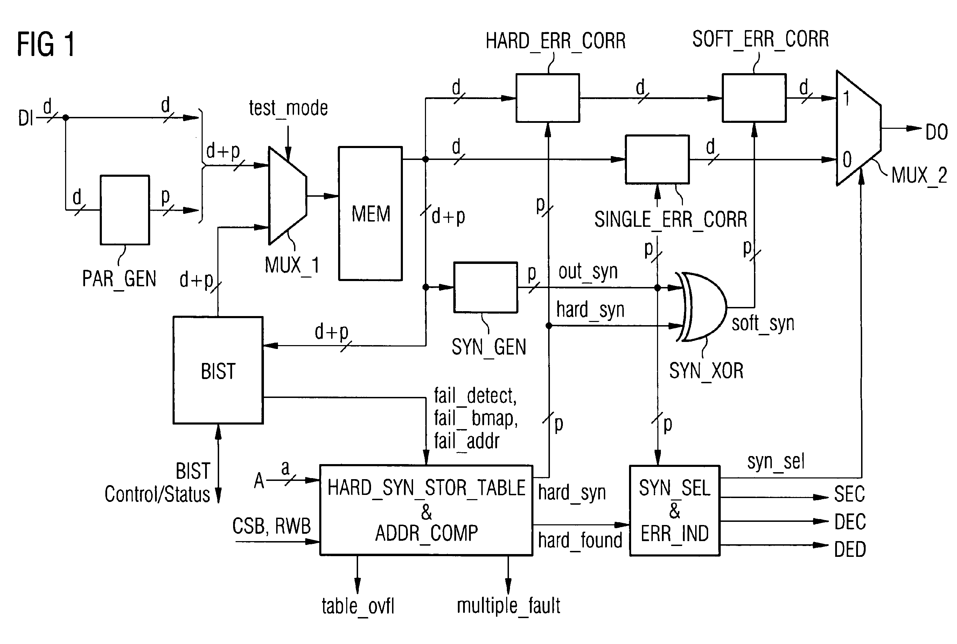

The architecture depicted in Fig. 1 comprises a main memory MEM, a memory test controller BIST, a syndrome generator SYN_GEN, a syndrome XOR block SYN_XOR, a single-error correction block SINGLE_ERR_CORR, a hard-error correction block HARD_ERR_CORR, a soft-error correction block SOFT_ERR_CORR, a hard syndrome storage table HARD_SYN_STOR_TABLE, an address comparison logic ADDR_COMP, a syndrome selection and error indication logic SYN_SEL & ERR_IND, a parity generator PAR_GEN and multiplexers MUX_1 and MUX_2.

The words stored in the main memory MEM consist of data bits and parity bits. The number of data bits each word comprises is d and the number of parity bits each word comprises is p.

The data are inputted into the main memory MEM via the multiplexer MUX_1. For that, one input of the multiplexer MUX_1 is fed with input data DI and parity bits that are generated by the parity generator PAR_GEN for each word.

The other input of the multiplexer MUX_1 is fed by the memory test controller BIST. The memory test controller BIST can perform tests with the main memory MEM in order to detect hard-errors. These hard-errors are mainly due to manufacturing defects. Once a hard-error is found, the address of the word comprising the hard-error and the hard syndrome hard_syn corresponding to the hard-error will be stored in the hard syndrome storage table HARD_SYN_STOR_TABLE. The test method will be explained in more detail below.

A word which is outputted from the main memory MEM feeds the syndrome generator SYN_GEN. The syndrome generator SYN_GEN generates p parity bits out of the d data bits of the memory word and compares them to the p parity bits included in the word by exclusive ORing. The result of this exclusive ORing comparison is an output syndrome out_syn comprising p bits.

Analysing the output syndrome out_syn is carried out by the syndrome selection and error indication logic SYN_SEL & ERR_IND. For that the syndrome selection and error indication logic SYN_SEL & ERR_IND first verifies whether the output syndrome out_syn is equal to zero. If the output syndrome out_syn is zero, no error is present in the memory word.

In case the output syndrome out_syn is not equal to zero the syndrome selection and error indication logic SYN_SEL & ERR_IND also determines the weight of the output syndrome out_syn. The weight of a syndrome is the number of '1's contained in the syndrome. It reflects the number of errors in the memory word.

Since a Hamming SEC/DED code is employed in the first exemplary embodiment of the invention shown in Fig. 1, there is one error in the memory word if the output syndrome out_syn has odd weight. An output syndrome out_syn having even weight implies that two errors are present in the memory word.

More details about the syndrome selection and error indication logic SYN_SEL & ERR_IND are given below.

In case of a single-bit error the single-error correction block SINGLE_ERR_CORR corrects the corresponding erroneous bit by inverting it. The location of the erroneous bit is determined by using the output syndrome out_syn which has been passed to the single-error correction block SINGLE_ERR_CORR.

The single-error correction block SINGLE_ERR_CORR corresponds to a standard block employed for the same purpose in a common SEC/DED ECC scheme.

When a double-bit error has been detected, it has to be first found out whether the memory location currently read contains a hard-error. For that, the address comparison logic ADDR_COMP compares the memory address A of the word currently read to each of the addresses stored in the hard syndrome storage table HARD_SYN_STORAGE_TABLE.

If no hard-error is found at the address A, the two errors are both soft-errors which cannot be corrected. In this case a double-error detection signal DED is activated by the syndrome selection and error indicating logic SYN_SEL & ERR_IND.

In case the memory address A matches an address stored in the hard syndrome storage table HARD_SYN_STOR_TABLE meaning the memory location contains a hard-error, the corresponding hard syndrome hard_syn is sent to the hard-error correction block HARD_ERR_CORR. The hard-error correction block HARD_ERR_CORR then only corrects the hard-error of the memory word. The location of the erroneous bit is determined by using the hard syndrome hard_syn. When outputted from the hard-error correction block HARD_ERR_CORR, the d data bits contain no longer a hard-fault, but still a soft-fault.

These data bits are sent to the soft-error correction block SOFT_ERR_CORR. The function of the soft-error correction block SOFT_ERR_CORR is to correct a soft-error in the event of a double-bit error. The soft-error correction block SOFT_ERR_CORR obtains the soft syndrome soft_syn from the syndrome XOR block SYN_XOR. The syndrome XOR block SYN_XOR calculates the soft syndrome soft_syn as follows:

$$\text{soft\_syn} = \text{out\_syn} - \text{hard\_syn}, \tag{1}$$

wherein the '-'-operation stands for a modulo-2 subtraction, which is equivalent to a bit-by-bit exclusive OR-operation.

Consequently, at the output of soft-error correction block SOFT_ERR_CORR the correct data bits of the memory word are generated.

These data bits feed a first input of the multiplexer MUX_2. A second input of the multiplexer MUX_2 is fed by the data bits outputted by the single-error correction block SINGLE_ERR_CORR. In case of a detected double-error with one hard-error the first input of the multiplexer MUX_2 is connected through to the output. In case of a detected single-error this happens to the second input of the multiplexer MUX_2. The selection of the data bits becoming the output data DO is controlled by the syndrome selection and error indication logic SYN_SEL & ERR_IND via the signal syn_sel.

In the first exemplary embodiment of the invention depicted in Fig. 1 the hard-error correction block HARD_ERR_CORR and the soft-error correction block SOFT_ERR_CORR have the same implementation than the single-error correction block SINGLE_ERR_CORR. These blocks only differ in how their inputs are respectively connected. The hard-error correction block HARD_ERR_CORR corrects a hard-fault by taking the hard-syndrome hard_syn stored in the hard syndrome storage table HARD_SYN_STOR_TABLE as an input. The soft-error correction block SOFT_ERR_CORR corrects a soft-fault by taking as an input the soft syndrome soft_syn coming from the syndrome XOR block XOR.

In the following the functions of the hard syndrome storage table HARD_SYN_STORAGE_TABLE and of the address comparison logic ADDR_COMP will be explained in more detail.

The hard syndrome storage table HARD_SYN_STORAGE_TABLE is composed of N entries, each entry comprises an address field with a bits, a hard syndrome field with p bits and an enable flag.

During a memory read operation (memory chip select signal CSB = 0 and memory read/write enable signal RWB = 1), the incoming memory addresses A of the memory word currently read are compared to each of the stored addresses. In case of match and if the corresponding enable flag is set, the corresponding hard syndrome hard_syn stored in that location is sent to the hard-error correction block HARD_ERR_CORR and a signal hard_found is also set.

During BIST, signals fail_detect, fail_bmap and fail_addr coming from the memory test controller BIST are used to calculate and store the hard syndromes hard_syn corresponding to the detected hard errors. When a fault is found by the memory test controller BIST, the signal fail_detect is set for one cycle and the following actions are executed:

1. If the signal fail_bmap contains more than one bit error, nothing is done and an output flag multiple_fault is set.
2. If the signal fail_bmap contains only one bit error, the corresponding hard syndrome hard_syn is calculated by a syndrome generator, which can be the syndrome generator SYN_GEN already present in the system or another identical one.
3. Then the signal fail_addr is compared to the already stored memory addresses.

   a. If the address is already present and the stored hard syndrome hard_syn differs from the new one, the output flag multiple_fault is set.
   b. If the address is present and the corresponding hard syndrome hard_syn is equal to the new one, nothing is done.
   c. If the address is not present, then it is stored in a new table location (if available) together with its associated hard syndrome hard_syn, and the corresponding enable flag is set.
   d. If no more locations in the hard syndrome storage table HARD_SYN_STORAGE_TABLE are available, then an output flag table_ovfl is set.

When multiple hard-faults are present at the same address location, this address location is considered not to be repairable with the current architecture. The only exception is when exactly two single-bit faults are present at the same address. In this case, the address location could be repaired by storing the hard syndrome hard_syn of the first fault in the hard syndrome storage table HARD_SYN_STORAGE_TABLE and treating the second fault as a soft-error. However, this strategy would reduce the final SER tolerance.

Setting the output flag table_ovfl means that there are more single-bit hard-faults than locations in the hard syndrome storage table HARD_SYN_STORAGE_TABLE. The main memory MEM would be still repairable if the additional hard-faults, whose hard syndromes hard_syn cannot be stored in the hard syndrome storage table HARD_SYN_STORAGE_TABLE, were treated as soft-faults by making use of the ECC fault tolerance capabilities. This would however reduce the final SER tolerance.

If the BIST is run at each system start-up, there is no need for permanently storing the hard syndromes hard_syn in nonvolatile storage elements. Compared to the standard production test and fuse approach, this method looks quite promising when considering that the ECC fault tolerance would allow for on-line correction of any fault not detected by the BIST, for example temperature dependent faults. Thus the memory reliability would not be affected. Moreover, this approach consents to correct hard-faults which may appear later in the product lifetime, thus even improving the final product reliability.

The syndrome selection and error indication logic SYN_SEL & ERR_IND performs the logic functions listed below:

1. If the output syndrome out_syn is zero, then the signal syn_sel, the single-error correction signal SEC, the double-error correction signal DEC and the double-error detection signal DED are set to '0'.
2. If the output syndrome out_syn has odd weight, then the signal syn_sel, the double-error correction signal DEC and the double-error detection signal DED are set to '0' and the single-error correction signal SEC is set to one.
3. If the output syndrome out_syn has even weight, this implies that two errors are present.

   a. If the signal hard_found is '0', then the signal syn_sel, the single-error correction signal SEC and the double-error correction signal DEC are set to '0' and the double-error detection signal DED is set to '1'.

b. If the signal hard_found is '1', then the single-error correction signal SEC and the double-error detection signal DED are set to '0' and the signal syn_sel and the double-error correction signal DEC are set to '1'.

In the following an implementation example of the first exemplary embodiment of the invention is given.

VHDL_RTL simulations and synthesis have been performed using the "RTL Performance Prototyping" flow of "Synopsis Physical Compiler". Physical synthesis estimates of area and timing impact of the current solution compared with a standard ECC code and with a solution based on ECC and redundant words are shown in a table below for an 8Kx22 single-port memory (an 8Kx16 main memory and an 8Kx6 parity memory) with a (22,16) SEC/DED code and 6x16-bit redundant words in L90-RVT technology. The clock cycle used for synthesis is 100 MHz. The access time is calculated with an output load of 0.01 pF. BIST and fuses are not included.

Comparing the solution according to the invention and the ECC and hard-redundancy scheme, a large reduction of about 28% of logic area is obtained with just a minor degradation of the access time of about 4%.

The area advantage of a solution according to the invention will be even more significant for memories with larger data width. For instance, a 32-bit memory with a (39,32) SEC/DED ECC and 6 redundant words will need 32 x 6 = 192 flip-flops for the redundant data registers compared to only (39 - 32) x 6 = 42 flip-flops for syndrome storage.

In the following table, one gate stands for an area of 3.45 µm in L90-RVT technology.

| | Total area | Number of registers | Logic area (gates) | Access time (ns) | Comment |
|---|---|---|---|---|---|
| Memory 8Kx16+8Kx6 | 0.374 | - | - | 2.95 | Reference. |
| (22,16) SEC/DED ECC | 0.376 | 0 | 600 | 3.80 | Single-error correction only. |
| (22,16) SEC/DED ECC and 6 redundant words | 0.389 | 229 | 4107 | 3.85 | Word redundancy for hard-errors and ECC for soft errors. |
| (22,16) soft and hard ECC with 6-entry table (solution according to the invention) | 0.384 | 135 | 2850 (2955) | 4.07 (4.02) | One hard-error and one softerror correction with the same SEC/DED code. |

The datapath of the architecture shown in Fig. 1 can also be adapted to a full-custom compiler and can be integrated in the SRAM memory compiler flow. The parity generator PAR_GEN, the syndrome generator SYN_GEN and the error correction blocks SINGLE_ERR_CORR, HARD_ERR_CORR and SOFT_ERR_CORR can be easily implemented as full custom blocks. This would reduce connection delays and timing impact. Nevertheless, the hard syndrome storage table HARD_SYN_STOR_TABLE and the syndrome selection and error indication logic SYN_SEL & ERR_IND should be more conveniently implemented as semi-custom blocks.

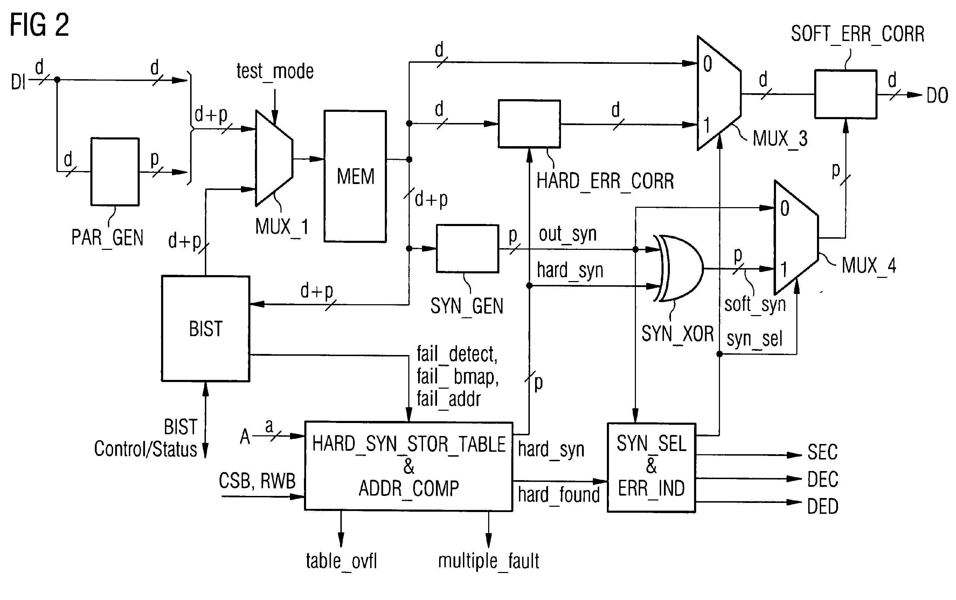

In Fig. 2 a second exemplary embodiment of the invention is depicted. The second exemplary embodiment is functionally equivalent to the first exemplary embodiment shown in Fig. 1.

The main difference compared to the first exemplary embodiment is that the soft-error correction block SOFT_ERR_CORR in the second embodiment is used for single-bit error correction and for soft-error correction.

In case of a single-bit error, the signal syn_sel is set to '0' and the soft-error correction block SOFT_ERR_CORR is then fed with the word containing the erroneous bit and the corresponding output syndrome out_syn via the multiplexers MUX_3 and MUX_4.

When a double-bit error containing a hard-error and a soft-error has been detected, the two errors are corrected using the hard-error correction block HARD_ERR_CORR and the soft-error correction block SOFT_ERR_CORR. For that, the signal syn_sel is set to '1' so that the soft-error correction block SOFT_ERR_CORR is fed with the word outputted from the hard-error correction block HARD_ERR_CORR and with the soft syndrome soft_syn generated by the syndrome XOR block SYN_XOR.

In comparison with the architecture shown in Fig. 1, the single-error correction block SINGLE_ERR_CORR is not required in the second exemplary embodiment of the invention and thus some area is saved. However, timing performances are severely degraded as the signal syn_sel must be computed before the soft-error correction is applied to the data.

**Claims**

1. An error detection and correction device for detecting and correcting errors in words outputted from a memory (MEM), wherein the words stored in said memory (MEM) comprise data bits and parity bits and wherein said error detection and correction device is comprised of:

   - a hard-error storage table (HARD_SYN_STOR_TABLE) in which the address locations of hard-errors within said memory (MEM) are stored,
   - a syndrome generator (SYN_GEN) for generating the output syndrome (out_syn) for a word outputted from said memory (MEM),
   - a hard-error correction block (HARD_ERR_CORR) for correcting one hard-error of said word if said output syndrome (out_syn) indicates a double-error in said word and if a hard-error is stored in said hard-error storage table (HARD_SYN_STOR_TABLE) for the address (A) of said word, wherein said hard-error is corrected by using a hard syndrome (hard_syn) generated from the corresponding hard-error, and
   - a soft-error correction block (SOFT_ERR_CORR) for correcting one soft-error of said word if said output syndrome (out_syn) indicates a double-error in said word and if a hard-error is stored in said hard-error storage table (HARD_SYN_STOR_TABLE) for the address (A) of said word, wherein said soft-error is corrected by using a soft syndrome (soft_syn) generated from said output syndrome (out_syn) and said hard syndrome (hard_syn).

2. The error detection and correction device according to claim 1,
   **characterized in that**

   - it comprises an exclusive OR gate (SYN_XOR) for exclusive ORing said output syndrome (out_syn) with said hard syndrome (hard_syn) to obtain said soft syndrome (soft_syn).

3. The error detection and correction device according to claim 1 or according to claim 2,
   **characterized in that**

   - it comprises a single-error correction block (SINGLE_ERR_CORR) for correcting one error of said word if said output syndrome (out_syn) indicates a single-error, wherein said error is corrected by using said output syndrome (out_syn).

4. The error detection and correction device according to claim 1 or according to claim 2,
   **characterized in that**

   - said soft-error correction block (SOFT_ERR_CORR) or said hard-error correction block (HARD_ERR_CORR) are designed for correcting one error of said word if said output syndrome (out_syn) indicates a single-error, wherein said error is corrected by using said output syndrome (out_syn).

5. The error detection and correction device according to one or more of the preceding claims,
   **characterized in that**

   - it comprises a syndrome selection logic (SYN_SEL) for selecting the data path corresponding to the number and the kind of the errors detected in a word outputted from said memory (MEM), and/or
   - it comprises an error indicating logic (ERR_IND) for indicating said number and said kind of the errors.

6. The error detection and correction device according to claim 5,
   **characterized in that**

   - said error indication logic (ERR_IND) activates a double-soft-error detection signal if said output syndrome (out_syn) indicates a double-error in said word and if no hard-error is stored in said hard-error storage table (HARD_SYN_STOR_TABLE) for the address (A) of said word.

7. The error detection and correction device according to one or more of the preceding claims,

**characterized in that**

- in said hard-error storage table (HARD_SYN_STOR_TABLE) the address locations of words within said memory (MEM) containing hard-errors and the corresponding hard syndromes (hard_syn) are stored.

8. The error detection and correction device according to one or more of the claims 1 to 6,
**characterized in that**

- in said hard-error storage table (HARD_SYN_STOR_TABLE) the address locations of words within said memory (MEM) containing hard-errors and the bit positions of said hard-errors are stored, and
- said error detection and correction device comprises a hard-syndrome generator for generating said hard syndrome (hard_syn) for memory words containing hard-errors.

9. The error detection and correction device according to claim 7 or according to claim 8,
**characterized in that**

- it comprises an address comparator (ADDR_COMP) for comparing the address of a word read from said memory (MEM) to the addresses stored in said hard-error storage table (HARD_SYN_STOR_TABLE).

10. Method of detecting and correcting errors in words outputted from a memory (MEM), wherein the words stored in said memory (MEM) comprise data bits and parity bits and wherein hard-errors of said memory (MEM) were determined before said method is performed and wherein said method is comprised of the following steps:

(a) generating the output syndrome (out_syn) for a word outputted from said memory (MEM);
(b) correcting one hard-error of said word if said output syndrome (out_syn) indicates a double-error in said word and if a hard-error for the address (A) of said word was previously determined, wherein said hard-error is corrected by using a hard syndrome (hard_syn) generated from the corresponding hard-error; and
(c) correcting one soft-error of said word if said output syndrome (out_syn) indicates a double-error in said word and if a hard-error for the address (A) of said word was previously determined, wherein said soft-error is corrected by using a soft syndrome (soft_syn) generated from said output syndrome (out_syn) and said hard syndrome (hard_syn).

11. Method according to claim 10,
**characterized in that**

- said soft syndrome (soft_syn) is generated by exclusive ORing said output syndrome (out_syn) with said hard syndrome (hard_syn).

12. Method according to claim 10 or according to claim 11,
**characterized in that**

- a single-error of said word is corrected if said output syndrome (out_syn) indicates a single-error in said word, wherein said single-error is corrected by using said output syndrome (out_syn).

13. Method according to one or more of the claims 10 to 12,
**characterized in that**

- if one or more errors are detected in a word, signals are set indicating the number and the kind of said errors.

14. Method according to one or more of the claims 10 to 13,
**characterized in that**

- a double-soft-error detection signal is activated if said output syndrome (out_syn) indicates a double-error in said word and if no hard-error for the address (A) of said word was previously determined.

15. Method according to one or more of the claims 10 to 14,
**characterized in that**

- the hard syndromes (hard_syn) corresponding to the hard-errors of said memory (MEM) were determined before said method is performed.

FIG 1

FIG 2

EP 1 560 118 A1

**EP 1 560 118 A1**

**European Patent Office**

## EUROPEAN SEARCH REPORT

Application Number

EP 04 29 0211

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X<br><br>A | US 4 319 357 A (BOSSEN DOUGLAS C)<br>9 March 1982 (1982-03-09)<br><br>* column 3, line 17 - column 5, line 19 *<br>* figures 3,6 *<br>--- | 1-5,8,<br>10-12<br>6,7,9,<br>13-15 | G06F11/10 |
| D,X<br><br><br><br><br><br>A | BOSSEN D C ET AL: "A SYSTEM SOLUTION TO THE MEMORY SOFT ERROR PROBLEM"<br>IBM JOURNAL OF RESEARCH AND DEVELOPMENT,<br>IBM CORPORATION, ARMONK, US,<br>vol. 24, no. 3, 1 May 1980 (1980-05-01),<br>pages 390-397, XP000715804<br>ISSN: 0018-8646<br><br>* page 391, column 2, line 23 - page 391, column 2, line 49 *<br>* page 392, column 1, line 21 - page 393, column 2, line 4 *<br>* figure 3 *<br>--- | 1-4,8,<br>10-12<br><br><br><br>5-7,9,<br>13-15 | |
| | -/-- | | TECHNICAL FIELDS SEARCHED (Int.Cl.7)<br><br>G06F<br>G11C |

The present search report has been drawn up for all claims

| Place of search | Date of completion of the search | Examiner |
|---|---|---|
| MUNICH | 18 June 2004 | Johansson, U |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

European Patent
Office

**EUROPEAN SEARCH REPORT**

Application Number

EP 04 29 0211

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | CHEN C L ET AL: "Fault-tolerant memory design in the IBM application system/400", PROCEEDINGS OF THE INTERNATIONAL SYMPOSIUM ON FAULT TOLERANT COMPUTING MONTREAL, JUNE 25 - 27, 1991, INTERNATIONAL SYMPOSIUM ON FAULT TOLERANT COMPUTING SYSTEMS. (FTCS), LOS ALAMITOS, IEEE COMP. SOC. PRESS, US, VOL. SYMP. 21, PAGE(S) 393-400 XP010023368 ISBN: 0-8186-2150-8 * page 393, column 1, line 14 - page 393, column 1, line 23 * * page 394, column 1, line 4 - page 394, column 1, line 25 * * page 396, column 1, line 23 - page 397, column 1, line 23 * * tables 2,3 * --- | 1-15 | |
| A | US 4 100 403 A (PATEL ARVIND MOTIBHAI ET AL) 11 July 1978 (1978-07-11) * column 7, line 6 - column 8, line 12 * * column 9, line 50 - column 10, line 49 * * figure 3B * ----- | 1-15 | TECHNICAL FIELDS SEARCHED (Int.Cl.7) |

The present search report has been drawn up for all claims

| Place of search | Date of completion of the search | Examiner |
|---|---|---|
| MUNICH | 18 June 2004 | Johansson, U |

EPO FORM 1503 03.82 (P04C01)

**EP 1 560 118 A1**

## ANNEX TO THE EUROPEAN SEARCH REPORT
## ON EUROPEAN PATENT APPLICATION NO.

EP 04 29 0211

This annex lists the patent family members relating to the patent documents cited in the above-mentioned European search report.
The members are as contained in the European Patent Office EDP file on
The European Patent Office is in no way liable for these particulars which are merely given for the purpose of information.

18-06-2004

| Patent document cited in search report | | Publication date | Patent family member(s) | | Publication date |
|---|---|---|---|---|---|
| US 4319357 | A | 09-03-1982 | DE | 3068895 D1 | 13-09-1984 |
| | | | EP | 0030612 A2 | 24-06-1981 |
| | | | JP | 1322301 C | 11-06-1986 |
| | | | JP | 56087300 A | 15-07-1981 |
| | | | JP | 60047625 B | 22-10-1985 |
| US 4100403 | A | 11-07-1978 | DE | 2816771 A1 | 26-10-1978 |
| | | | FR | 2389198 A1 | 24-11-1978 |
| | | | GB | 1580869 A | 03-12-1980 |
| | | | JP | 1168112 C | 30-09-1983 |
| | | | JP | 53132951 A | 20-11-1978 |
| | | | JP | 57046160 B | 01-10-1982 |

For more details about this annex : see Official Journal of the European Patent Office, No. 12/82